(19) Europäisches Patentamt
European Patent Office
Office européen des brevets

(11) Publication number: 0 290 962
A2

(12) # EUROPEAN PATENT APPLICATION

(21) Application number: 88107243.3

(51) Int. Cl.4: C07C 87/58

(22) Date of filing: 05.05.88

(30) Priority: 12.05.87 US 49766

(43) Date of publication of application:
17.11.88 Bulletin 88/46

(84) Designated Contracting States:
BE CH DE FR GB LI

(71) Applicant: AIR PRODUCTS AND CHEMICALS, INC.
P.O. Box 538
Allentown, Pennsylvania 18105(US)

(72) Inventor: Burgoyne, William Franklin, Jr.
1090C Cold Stream Circle
Emmaus, PA 18049(US)
Inventor: Dixon, Dale David
2216 Parklake Pointe
Venice, FL 33595(US)

(74) Representative: Kador & Partner
Corneliusstrasse 15
D-8000 München 5(DE)

(54) **Alkenylated phenylenediamines for use in preparing cross linkable condensation polymers.**

(57) This invention relates to a class of alkenylated phenylenediamines having at least one alkenyl group ortho to an amine group. More particularly the phenylenediamines are represented by the formula:

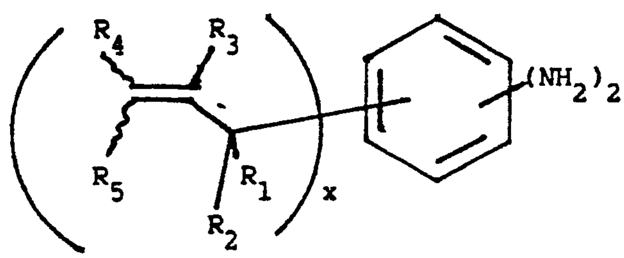

wherein $R_1$, $R_2$, $R_3$, $R_4$ and $R_5$ are hydrogen, $C_{1-3}$ aliphatic, phenyl, halogen or alkoxy radicals, or $R_2$ and $R_4$ or $R_5$ are bridged via an alkylene radical $-(CH_2)_y-$wherein $y = 2$ to 5 and ortho to an amine group,provided that in said formula at least one of $R_1$, $R_2$, $R_3$, $R_4$ or $R_5$ is $C_1$ or greater and not more than one is phenyl, halogen or alkoxy and x is one or two.

The above described alkenylated phenylenediamines have been found to be well suited as antioxidants and as tri-and tetra functional chain extenders in forming polyurethane/urea elastomers systems and for providing pendant unsaturation for post curing and polymerization.

EP 0 290 962 A2

# ALKENYLATED PHENYLENEDIAMINES FOR USE IN PREPARING CROSSLINKABLE CONDENSATION POLYMERS

## TECHNICAL FIELD

This invention pertains to alkenylated phenylenediamines having particular suitability for antioxidant use and for post curable, crosslinkable polyurethane/urea elastomer systems.

## BACKGROUND OF THE INVENTION

Alkylated diamines have been known for a substantial period of time and find use in the preparation of polyurethane elastomers. The diamines are typically used in that form as chain extenders for polyurethanes, i.e., forming a short chain urea linkage to strengthen the elastomer. As is known, the alkyl group alters the reactivity of the amine thus giving the composition unique processing properties for producing polyurethane elastomers.

A secondary use for the aklylated diamine products is in the manufacture of diisocyanates which are also suited for the synthesis of polyurethane elastomers. They can also be used for plasticizers, or as intermediates for the manufacture of pesticides and alkyd resin modifiers.

Two types of synthesis techniques have been used to produce alkylated aromatic amines, such as, an alkylated toluenediamine. One of the earliest techniques used to prepare an alkylated aromatic diamine employed a Friedel-Crafts alkylation of an aromatic hydrocarbon, then dinitration of the alkylated aromatic hydrocarbon followed by reduction of the nitro groups to amine groups. The diamine could be converted to the diisocyanate by reaction with phosgene. Another technique for producing an alkylated aromatic amine involved nitration of an aromatic hydrocarbon, followed by reduction to the amine and then alkylation of the amine.

Representative patents illustrating various alkyl aromatic diamines and derivatives thereof are as follows:

U.S. Patents 3,428,610 and 4,218,543 disclose the use of alkylated toluenediamines in the manufacture of polyurethane resins with the '543 patent showing its use in RIM manufacturing techniques. Alkylated diamines include 1-methyl-3,5-diethylphenylene-2,4-diamine and 1,3,5-trimethylphenylene-2,4-diamine. The diethyltoluenediamine derivative is best known and is referred to as diethyl TDA or DETDA and is probably the most widely used alkylated aromatic diamine for RIM manufacture.

U.S. 4,440,952 shows the synthesis of 1-methyl-2,4-diamino-5-isopropylbenzene and 1-methyl-2,6-diamino-3-isopropylbenzene and the use of the 2,6-isomer as a chain extender for polyurethanes.

European Patent 0069286 discloses various alkyl-substituted phenylenediamines as chain extenders for the production of polyurethanes by reaction injection molding techniques. Some of the compositions suggested as being suited for such use include the 1,3-dimethyl-5-tert-butyl-2,6-diaminobenzene, 2-methyl-4,6-di-tert-butyl-1,3-diaminobenzene, 1,3-dimethyl-5-tert-amyl-2,4-diaminobenzene or its equivalent.

U.S. 4,529,746 discloses the synthesis of $C_{1-4}$ alkylated vicinal toluenediamines and their use as extenders for the preparation of polyurethane-polymer elastomers. The example shows an ethylated vicinal toluenediamine.

Aromatic compositions having unsaturated organo substituents are known and have been prepared by alkylation of aromatic compositions with diolefins. Some patents which show the manufacture of aromatic compositions having unsaturated organo substituents include:

U.S. 2,403,963 which discloses the reaction of benzene and butadiene in the presence of a boron trifluoride catalyst. Phenylbutenes are produced.

U.S. 2,471,922 discloses that aromatic hydrocarbons, which include phenols and aromatic halides, can be reacted with 1,3-diolefins to produce alkenyl derivatives. Examples of low-boiling 1,3-diolefins which can be used in the alkenylation include 1,3-butadiene, 1,3-pentadiene and so forth. Catalyst systems included boron trifluoride and boron trifluoride-phosphoric acid systems.

U.S. 3,865,889 discloses the preparation of an alkenylated aromatic hydrocarbon such as those obtained by reacting butadiene with an alkylbenzene, e.g., toluene or xylene. An alkali metal promoter is used to catalyze the reaction.

U.S. 2,843,565 discloses the production of butenyl-phenol-aldehyde resins which involves the reaction of an alkenylphenol, with formaldehyde. Conjugated dienes such as piperylene, cyclopentadiene, 1-chloro-2-methyl-butadiene are reacted with phenols in the presence of phosphoric acid catalyst and the reaction

product then reacted with formaldehyde.

West German 1,079,628 discloses the preparation of cyclopentenyl-substituted aromatic amines by reacting cyclopentadiene at elevated temperature in the presence of bleaching earth with primary, secondary or tertiary aromatic amine substrates. Aniline, N-methylaniline, chloroaniline, and phenylenediamine are suggested candidates.

European Patent 0082258 discloses various meta-phenylenediamines having one or two benzyl rings having lower reactivity due to steric hindrance. Steric hindrance is effected through the use of an aromatic substituent which also may be substituted with various groupings. An example of an amine is 4,6-bis ($\alpha,\alpha$ dimethylbenzyl)-1,3-phenylenediamine prepared by reacting 2-methylstyrene with meta-phenylenediamine. An alkyl-m-phenylenediamine is suggested as a candidate.

## SUMMARY OF THE INVENTION

This invention pertains to alkenylated phenylenediamine and derivatives thereof and particularly to mono-alkenylated phenylenedamines. In contrast to prior art aromatic diamine compositions, the organo group contains carbon-carbon unsaturation and is polymerizable with amine-reactive difunctional condensation monomers such as dicarboxylic acids and their esters, diisocyanates, and diepoxides and also polymerizable with other unsaturated monomer systems. These aromatic diamine compositions are represented by the formula:

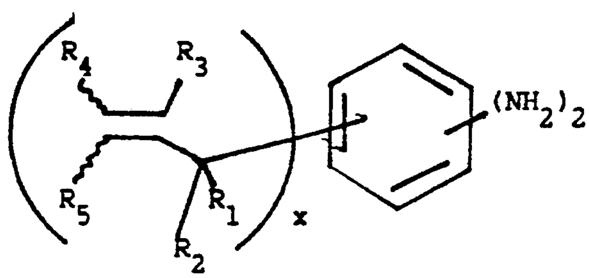

wherein $R_1$, $R_2$, $R_3$, $R_4$ and $R_5$ are hydrogen, $C_{1-3}$ aliphatic, phenyl, halogen or alkoxy radicals or $R_2$ and $R_4$ or $R_5$ are bridged via an alkylene radical $-(CH_2)_y-$wherein y = 2 to 5 and ortho to an amine group, provided that in said formula at least one of $R_1$, $R_2$, $R_3$, $R_4$ or $R_5$ is $C_1$ or greater and provided that not more than one is phenyl, halogen, or alkoxy and x is one or two.

There are several advantages associated with the specific compositions of this invention and these advantages include:

- a phenylenediamine composition which has an unsaturated organo group ortho to an amine, for providing antioxidant activity for rubber and hydrocarbons such as fuels and oils;
- a phenylenediamine composition having antioxidant characteristics that provides for attachment of organic radicals or polymers at one or both nitrogens which allows for tailoring of the solubility characteristics;
- a phenylenediamine composition which has an unsaturated organo group ortho to an amine for providing hindered reactivity to an amino group for reaction injection molding (RIM) of urethane and polyurea elastomer systems;
- alkenylated phenylenediamines which can be converted to aromatic diisocyanates having a carbon-carbon unsaturation for producing unique properties in polyurethane and polyurea resin systems, latexes, UV curable coatings and adhesives and as reactive diluents for polyesters;
- an ability to form polyurethane-urea elastomers systems, either through the diamine fuctionality or isocyanate functionality, if converted;
- an ability to produce a variety of resin systems, e.g., polyurethane systems; and other condensation polymers such as polyamides, polyesters, and polyethers through the amine functionality or pendant unsaturation; and
- an ability to effect reaction between various resin systems and polymerizable monomers and thereby introduce monomer groups for desirable end properties.

DETAILED DESCRIPTION OF THE INVENTION

The compounds of this invention, as indicated above, are represented by the formulas:

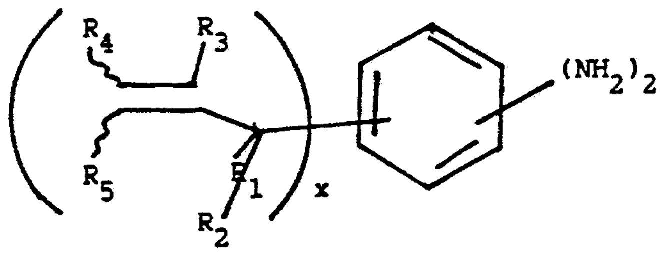

wherein $R_1$, $R_2$, $R_3$, $R_4$ and $R_5$ are hydrogen, $C_{1-3}$ aliphatic, phenyl, halogen or alkoxy radicals or $R_2$ and $R_4$ or $R_5$ are bridged via an alkylene radical $-(CH_2)_y$-wherein y = 2 to 5, and x is one or two provided that in said formula at least one of $R_1$, $R_2$, $R_3$, $R_4$ or $R_5$ is $C_1$ or greater. The alkenyl group in contrast to the prior art is ortho to the amine and it does not contain more than one phenyl, or halogen or alkoxy group.

The structural formula has been written to reflect that stereo chemistry exists in the reaction product and $R_5$ may be cis or trans to $R_3$. When $R_5$ is cis with $R_3$, then $R_4$ is combined with $R_2$ rather than $R_5$ being combined with $R_2$ in order to form a $\beta,\gamma$-unsaturated ring.

The compounds of this invention are synthesized by alkylating phenylenediamine with a conjugated diene having from 4 to about 12 carbon atoms. It is because the alkenylation is effected via the amino group that one is able to introduce at least one alkenyl group in a position ortho to an amine group and achieve unique results associated with the specific regiochemistry associated with those isomers. These unique properties include intioxidant characteristics and, urethane processability characteristics.

Much of the art describing the manufacture of alkenylated aromatic hydrocarbons uses a homogenous catalyst system, e.g., boron trifluoride or boron trifluoride-phosphoric acid mixture or weakly acidic heterogenous catalyst systems. Other art in the manufacture of alkylated aromatic amines uses bleaching earths, clays, montmorillonite and alkali metal ion exchanged zeolites. In contrast to the prior art method for producing alkenylated phenols and alkylated aromatic amines, it is our belief alkenylated aromatic amines are best prepared using silica-alumina or crystalline molecular sieves which are solid phase and have an acidity factor of at least 0.3 and preferably in excess of 0.8 as the catalyst. The acidity factor is a measurement of acidity of the zeolite catalyst and involves contact of the catalyst with ammonia under adsorption conditions followed by desorption. More particularly, one gram of catalyst is contacted with ammonia at room temperature and then desorbed by heating to a temperature from ambient to 200° C at a rate of 10° per minute, then holding at 200° C for two hours. The amount of ammonia irreversibly adsorbed by one gram at 200° C is indicative of acidity and indicative of the strength of the amine/acid bond. The acidity factor then is the amount of ammonia irreversibly adsorbed expressed in millimoles per gram of catalyst at 200° C and as stated this level should be at least 0.3 and preferably 0.8 millimoles ammonia per gram of catalyst.

Zeolites which can be utilized for alkenylation of phenylenediamines include X, Y, faujasite, ferrierite, offretite, chabazite, gmelinite, erionite, ferrierite, mordenite and the ZSM family. When initially prepared, the cation in the crystalline molecular sieve is an alkali metal, typically sodium. This ion must be exchanged in sufficient proportion, usually, 60% or greater, with an acidic ion such as a rare earth metal, e.g., lanthanum, praseodymium; hydrogen or some of the transition metals such as nickel, copper, chromium and the like. The substitution of various ions for the sodium ion alters the acidity of the crystalline molecular sieve, thus making it more reactive and catalytically effective for ring alkenylation of the aromatic amine.

The naturally occurring and synthetic zeolites used in the process normally have a silica to alumina molar ratio from about 2 to 25:1. However, if the silica to alumina ratio is low or acidity borders on the low side of that desired, the silica to alumina ratio and acidity of the zeolite may be altered by a technique called dealumination. In effect, the practice of dealumination decreases the alumina content in the zeolite thereby increasing the silica to alumina ratio. The removal of alumina from the internal structure affects acidity and may also enlarge the cage structure or pore size of zeolite to permit entry of and diffusion of larger molecules into its internal structure. Thus, one may be able to utilize a particular cation in a dealuminated zeolite, but not use the same cation in its non-dealuminated state. This is because the original cation may not have provided sufficient acidity for effecting ring alkenylation of toluenediamine. Some of the techniques for dealumination include chelation, dehydration or acidification, the latter entailing the treatment of the zeolite with an inorganic acid. Techniques suited for dealumination of zeolites are well known.

Zeolites and crystalline molecular sieves are porous materials with the pores having generally uniform molecular dimensions. Cavities or cages are formed in this zeolite or molecular sieve and connected by channels of generally defined diameter. For the practice of this invention the pore diameter should be sufficiently large to permit the molecules to effectively enter the interior of the molecular sieve for reaction and to exit as final product. Typically, the pore size will range from about 6 to 15 Angstroms, but the size of a pore required for reaction can vary depending upon the product being produced. If conversion levels appear low for the particular catalyst, that level may be due to reactant diffusion resistance through the molecular sieve. If that is the case, a molecular sieve of slightly larger pore size should be tried.

Molecular sieves have been developed which have been defined as nonzeolites but have a cage structure that performs similarly to zeolites. In many cases, they contain alumina and silica in combination with other components, e.g., phosphorus, boron, germanium, titanium, etc. In the alkenylation of phenylenediamines as described here, they perform similarly to zeolites, and representative crystalline molecular sieves are described in U. S. Patent 4,440,871; European Patent 124,119 and European Patent 121,232 and the subject matter of these patents incorporated by reference. Borosilicate and borogermanate zeolites, although not disclosed in these patents, possibly can also be used. For purposes of practicing this invention, i.e., in the production of alkenylated phenylenediamines, molecular sieves are deemed equivalent to and included as catalyst material.

The aromatic amine used in the alkenylation reaction is phenylenediamine and the phenylenediamine isomers include the 1,3-the 1,4-and the 1,2-vicinal phenylenediamine derivatives. The alkenylated phenylenediamines are prepared by reacting phenylenediamine with a diolefin in the presence of an acidic solid phase catalyst, particularly the crystalline molecular sieves as described.

Diolefins useful in this invention are acyclic and cyclic conjugated dienes. Examples of some diemes are 1,3-butadiene, isoprene, chloroprene, 2,3-dimethyl-1,3-butadiene, piperylene, 2-methyl-1,3-pentadiene, 2,4-hexadiene, 3,4-demethyl-2,4-hexadiene, 2-phenyl-1,3-butadiene, 2-methoxy-1,3-butadiene, 2,5-dimethyl-2,4-hexadiene, cyclopentadiene, dicyclopentadiene, methylcyclopentadiene and 1,4-cyclooctadiene.

Some preferred compositions are listed below.

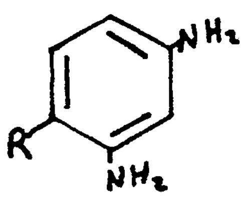 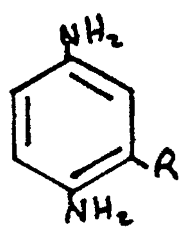 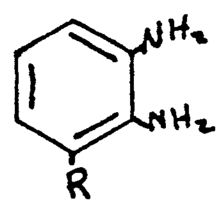

wherein R = $-CH_2CH = CHCH_3$

= $-CH_2CH = C(CH_3)_2$

= $-C(CH_3)_2CH = CH_2$

= $-C(CH_3)_2CH = C(CH_3)_2$

= 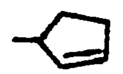

= 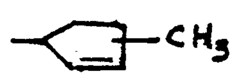

Ring alkenylation is effected by reacting phenylenediamine with the diolefin at temperatures ranging from about 100 to 250 °C and preferably from about 140 to 220 °C. The pressures will range from about 15 to 2000 psig and generally in the range of 500 to 1000 psig. It is common practice to alter the temperature and the pressure within the above ranges specified to optimize selectivity and conversion to the desired product. Mole ratios of olefin to phenylenediamine used in the reaction will range from about 1:5 to 10:1 and the reaction time will generally be from about 2 to 48 hours when synthesized in an autoclave or within 0.05 to 6 hr -1, expressed as a liquid hourly space velocity (LHSV) for fixed bed continious operation.

In the ring alkenylation of phenylenediamines utilizing the solid acid catalyst systems the diolefins, and particularly the olefins having conjugated unsaturation, tend to polymerize and generate substantial amounts of by-product polymer. In many cases the combination of reactant and catalyst preclude the formation of

alkenylated phenylenediamines and substantially all of the olefin is converted to by-product polymer. Butadiene and cyclopentadiene are two offenders and both polymerize readily under the reaction conditions providing low yields of ring alkenylation. To avoid polymer production it is necessary to carry out the ring alkenylation of phenylenediamine in the presence of a solvent which is inert to reaction with phenylenediamine or the olefin and does not promote polymerization. Solvents which can be best utilized generally have a dielectric constant in the range of 1.5 to 3.0 and include paraffins such as pentane, hexane, heptane, octane, decane; toluene and xylene, paraffinic naptha fractions, kerosene; and cycloparaffin hydrocarbons having from about 5 to 10 carbon atoms, e.g., cyclohexane and so forth. Other inert solvents, especially ethers such as dioxane and tetrahydrofuran, may be effectively used.

The alkenylated phenylenediamines may be used as pure isomers by themselves or as a mixture of ortho, meta, and para isomers.

The alkenylated phenylenediamines described herein have a variety of uses and can be used in preparing coatings and adhesives. In contrast to currently available urethane coating systems having unsaturation therein, e.g. those containing glycerides of linseed oil or other siccative oil in an isocyanate prepolymer backbone, the unsaturation is pendant from the backbone. When the unsaturation is in the polymer backbone, as in the prior art, one may experience difficulty in obtaining desirable polymerization rates and in obtaining desirable rates for post curing of the reactive unsaturation. With the alkenylated phenylenediamines, the unsaturation is pendant from the polymer backbone and permits faster post curing while still providing a desirable aromatic ring in the backbone.

The text, Polyurethanes Chemistry and Technology by Saunders and Frisch, (1964) has several chapters relating to the utilization of polyurethanes having unsaturation therein; such chapters include applications for coatings, adhesives, and fibers.

In addition to formulating polyurethanes or polyurea elastomers, the pendant unsaturation in the alkenylated toluenediamine can be polymerized by conventional techniques with other polymerizable monomers, to enhance the physical properties of the elastomers systems. Typical monomers which may be polymerized with the pendant unsaturation include vinyl acetate, lower alkly ($C_{1-6}$) esters of acrylic and methacrylic acid, vinyl chloride, vinylidine chloride, styrene, butadiene, isoprene, and cyclopentadiene.

One of the problems associated with effecting polymerization of the alkenylated phenylenediamines with other polymerizable monomers is the relatively slow polymerization activity of the alkenylated aromatic diamine. During alkenylation the double bond becomes allylic to the aromatic ring. As is known, the reactivity of the allylic double bond is low and catalyst levels and conditions may require adjustment to obtain desirable polymerization rates. The bond may be isomerized to a conjugated relationship with the ring.

The alkenylated phenylenediamines described herein have also been found to be excellent antioxidants for oils and rubber. The high antioxidant activity coupled with syntheses based on relatively inexpensive raw materials provides for products having a desirable cost/performance ratio. The alkenylated products have been evaluated for use in hydraulic oil and natural rubber, but it is believed the antioxidant properties will be generally useful for adhesives, sealants, coatings, elastomers, plastics, and petroleum products such as hydrocarbon fuels.

The following examples are provided to illustrate preferred embodiments of the invention and are not intended to restrict the scope thereof. All indicated products gave satisfactory spectral analyses.

## Example 1

### Preparation of 4-(Cyclopent-2-enyl)-1,3-phenylenediamine

A 200 g (1.85 mol) portion of 1,3-phenylenediamine, 183 g (1.39 mol, 2.77 equiv.) of dicyclopentadiene, 225 g (3.14 mol) of pentane, and 20 g of an amorphous alumina-silica catalyst comprised of 13% alumina and 87% silica were charged to a 1000 cc pressure vessel equipped with a mechanical stirrer. The vessel was sealed and purged with nitrogen leaving a 35 psig nitrogen blanket. The vessel contents were heated to 215 °C with stirring and were maintained at that temperature for 22 hr. Initial reaction pressure was 522 psig. The contents were cooled to 150 °C and isolated catalyst free by hot filtration. Selective removal of residual cyclopentadiene and pentane by vacuum distillation and analysis by gas chromatography (GC) revealed the following product mixture:

| | Wt % |
|---|---|
| 1,3-phenylenediamine | 53.11 |
| 4-(cyclopent-2-enyl)-1,3-phenylenediamine | 40.31 |
| 4,6-(cyclopent-2-enyl)-1,3-phenylenediamine | 6.58 |
| | 100.0% |

Conversion of 1,3-phenylenediamine = 34.5%

Example 2

Preparation of 2-(Cyclopent-2-enyl)-1,4-phenylenediamine

A 200 g (1.85 mol) portion of 1,4-phenylenediamine, 170 g (1.29 mol, 2.57 equiv.) of dicyclopentadiene, 225 g (3.14 mol) of pentane, and 20 g of 13% alumina/87% silica catalyst were reacted in a fashion similar to example 1. The reaction was conducted at 215°C for 20 hr. with an initial pressure of 475 psig. Product analysis by gas chromatography on hydrocarbon free sample revealed the following assay:

| | Wt % |
|---|---|
| 1,4-phenylenediamine | 79.21 |
| 2-(cyclopent-2-enyl)-1,4-phenylenediamine | 20.79 |
| | 100.00% |

Conversion of 1,4-phenylenediamine = 14.0%

Example 3

Cyclopent-2-enyl Derivatives of 1,2-Phenylenediamine

A 200 g (1.85 mol) portion of 1,2-phenylenediamine, 183 g (1.38 mol, 2.77 equiv.) of dicyclopentadiene, 226 g of pentane and 20 g of 13% alumina/87% silica catalyst were reacted in a fashion similar to Example 1. The reaction was conducted at 215°C for 24 hr. with an initial reaction pressure of 448 psig. Product analysis by gas chromatography on hydrocarbon free sample revealed the following assay:

| | Wt % |
|---|---|
| 1,2-phenylenediamine | 22.94 |
| 3-(cyclopent-2-enyl)-1,2-phenylenediamine | 36.46 |
| 4-(cyclopent-2-enyl)-1,2-phenylenediamine | 24.42 |
| di(cyclopent-2-enyl)derivatives | 13.71 |
| | 97.53% |

Conversion of 1,2-phenylenediamine = 63.7%

Example 4

Preparation of 1,2-Phenylenediamine/Isoprene Addition Products

1,2-Phenylenediamine (200 g, 1.85 mol), 189 g (2.77 mol) of isoprene, 225 g (3.14 mol) of pentane and 20 g of 13 wt% alumina/87 wt% silica catalyst were reacted in a fashion similar to example 1. The reaction was conducted at 200°C for 24 hr. with an initial pressure of 426 psig. Product analysis by gas chromatography on isoprene and pentane free sample afforded the following assay.

| | Wt % |
|---|---|
| 1,2-phenylenediamine | 79.74 |
| 3-(1,1-dimethylprop-2-enyl)-1,2-phenylenediamine | 3.46 |
| 3-(3-methylbut-3-enyl)-1,2-phenylenediamine | 4.90 |
| 3-(3-methylbut-2-enyl)-1,2-phenylenediamine | 8.99 |
| Other mono-prenylated 1,2-phenylenediamines | 2.91 |
| | 100.00% |

Conversion of 1,2-phenylenediamine = 13.5%

Example 5

Preparation on 1,3-Phenylenediamine/Isoprene Addition Products

A 200 g (1.85 mol) portion of 1,3-phenylenediamine was alkenylated with 189 g (2.77 mol) of isoprene in the same manner as shown in example 4. Product analysis by gas chromatography on isoprene and pentane free sample afforded the following assay.

| | Wt % |
|---|---|
| 1,3-phenylenediamine | 65.00 |
| 4-(3-methylbut-1-enyl)-1,3-phenylenediamine | 16.27 |
| Other mono-ring-prenylated-1,3-phenylenediamines | 10.70 |
| | 91.97% |

Conversion of 1,3-phenylenediamine = 20.5%

Example 6

Antioxidant Testing in Hydraulic Oil

The test candidate phenylenediamines, were evaluated for antioxidant properties in hydraulic oil. The evaluation was performed by the ASTM method D2272-67 entitled "Oxidation Stability of Steam Turbine Oils by Rotating Bomb" using Sunvis 21 (a light hydraulic oil) as the test oil. A good antioxidant will have an oxidation inhibitation time (RBOT) greater than 150 min. at 0.5 wt.% utilization.

The chemicals designation and their respective test results are tabulated as follows:

| TEST COMPOUND | RBOT TIME MINUTES |
|---|---|
| Control Medium - Sunvis 21 Mineral Oil | 33 |
| Stalite S* | 151 |
| 2-(cyclopent-2-enyl)-aniline | 92 |
| 2,4-toluenediamine | 118 |
| 2-(cyclopent-2-enyl)-1,4-phenylenediamine | 120 |
| 5-(cyclopent-2-enyl)-2,4-toluenediamine | 223 |
| 3-(cyclopent-2-enyl)-2,6-toluenediamine | 268 |
| 3-(3-methylbut-2-enyl)-2,6-toluenediamine | 293 |
| 5-*tert*-butyl-2,4-toluenediamine | 277 |

*a commercially available antioxidant

The above results show that 2-(cyclopent-2-enyl)-1,4-phenylenediamine has antioxidant properties. Although it was not as good as some of the toluenediamines, the phenylenediamine composition was effective.

**Claims**

1. A phenylenediamine composition having one alkenyl substituent and ortho to an amine group represented by the formula:

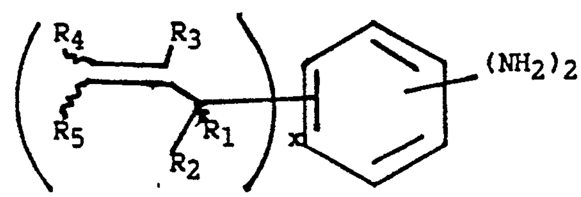

wherein $R_1$, $R_2$, $R_3$, $R_4$ and $R_5$ are hydrogen, $C_{1-3}$ aliphatic, phenyl, halogen or alkoxy radicals, or $R_2$ and $R_4$ or $R_5$ are bridged via an alkylene radical $-(CH_2)_y-$wherein $y = 2$ to 5 and ortho to an amine group, provided that in said formula at least one of $R_1$, $R_2$, $R_3$, $R_4$ or $R_5$ is $C_1$ or greater and not more than one is phenyl, halogen or alkoxy and x is one or two.

2. The composition of Claim 1 wherein the amine groups in said phenylenediamine composition are in the 1 and 3-positions or in the 1 and 4 positions.

3. The composition of Claim 2 wherein $R_1$, $R_2$, $R_3$, and $R_4$ are hydrogen and $R_5$ is $C_1$ aliphatic.

4. The composition of Claim 2 wherein $R_1$, $R_2$, and $R_3$ are hydrogen and $R_4$ and $R_5$ are $C_1$ aliphatic.

5. The composition of Claim 2 wherein $R_1$, $R_3$ and $R_4$ are hydrogen $R_2$ is chlorine and $R_5$ is $C_1$ aliphatic.

6. The composition of Claim 2 wherein $R_1$, and $R_4$ are hydrogen and $R_2$, $R_3$ and $R_5$ are $C_1$ aliphatic.

7. The composition of Claim 2 wherein $R_2$, $R_3$ and $R_4$ are hydrogen and $R_1$ and $R_5$ are $C_1$ aliphatic.

8. The composition of Claim 2 wherein $R_1$, and $R_3$ are hydrogen and $R_2$, $R_4$ and $R_5$ are $C_1$ aliphatic.

9. The composition of Claim 2 wherein $R_2$ and $R_3$ are hydrogen and $R_1$ and $R_4$ are $C_1$ and $R_5$ is $C_2$ aliphatic.

10. The composition of Claim 2 wherein $R_1$, $R_2$, $R_3$ and $R_4$ are $C_1$ aliphatic and $R_5$ is $C_2$ aliphatic.

11. The composition of Claim 2 wherein $R_1$ and $R_2$ are $C_1$ aliphatic and $R_3$, $R_4$, and $R_5$ are hydrogen.

12. The composition of Claim 2 wherein $R_1$, $R_3$, and $R_4$ are hydrogen, $R_2$ is phenyl and $R_5$ is a $C_1$ aliphatic.

13. The composition of Claim 2 wherein $R_1$, $R_3$ and $R_4$ are hydrogen, $R_2$ is a $C_1$ aliphatic ether and $R_5$ is $C_1$ aliphatic.

14. The composition of Claim 2 wherein $R_3$ and $R_4$ are hydrogen, $R_1$ and $R_2$ are $C_1$ aliphatic adn $R_5$ is a $C_3$ branched aliphatic.

15. The composition of Claim 2 wherein $R_1$, $R_3$ and $R_4$ are hydrogen and $R_2$ and $R_5$ are combined to form a 5 carbon membered ring.

16. The composition of Claim 2 wherein $R_1$ and $R_3$ are hydrogen, $R_4$ is $C_1$ aliphatic and $R_2$ and $R_5$ are combined to form a 5 carbon membered ring.

17. A phenylenediamine composition having two alkenyl substituents each <u>ortho</u> to an amine group and represented by the formula:

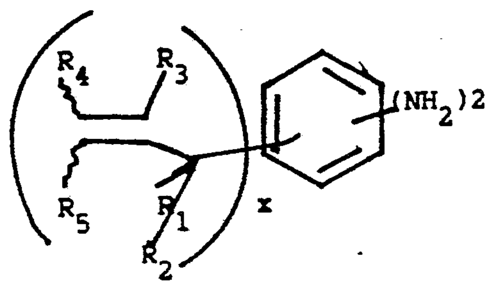

wherein $R_1$, $R_2$, $R_3$, $R_4$ and $R_5$ are hydrogen, $C_{1-3}$ aliphatic, phenyl, halogen or alkoxy radicals, or $R_2$ and $R_4$ or $R_5$ are bridged via an alkylene radical $-(CH_2)_y$-wherein $y = 2$ to 5 and <u>ortho</u> to an amine group, provided that in said formula at least one of $R_1$, $R_2$, $R_3$, $R_4$ or $R_5$ is $C_1$ or greater and not more than one is phenyl, halogen or alkoxy and x is one or two.

18. The composition of Claim 17 wherein the amine groups in said phenylenediamine composition are in the 1 and 3-positions or in the 1 and 4 positions.

19. The composition of Claim18 wherein $R_1$, $R_2$, $R_3$ and $R_4$ are hydrogen and $R_5$ is $C_1$ aliphatic.

20. The composition of Claim18 wherein $R_1$, $R_2$, and $R_3$ are hydrogen and $R_4$ and $R_5$ are $C_1$ aliphatic.

21. The composition of Claim18 wherein $R_1$, $R_3$ and $R_4$ are hydrogen $R_2$ is chlorine and $R_5$ is $C_1$ aliphatic.

22. The composition of Claim18 wherein $R_1$, and $R_4$ are hydrogen and $R_2$, $R_3$ and $R_5$ are $C_1$ aliphatic.

23. The composition of Claim18 wherein $R_2$, $R_3$ and $R_4$ are hydrogen and $R_1$ and $R_5$ are $C_1$ aliphatic.

24. The composition of Claim18 wherein $R_1$, and $R_3$ are hydrogen and $R_2$, $R_4$ and $R_5$ are $C_1$ aliphatic.

25. The composition of Claim18 wherein $R_2$ and $R_3$ are hydrogen and $R_1$ and $R_4$ are $C_1$ and $R_5$ is $C_2$ aliphatic.

26. The composition of Claim18 wherein $R_1$, $R_2$ $R_3$ and $R_4$ are $C_1$ aliphatic and $R_5$ is $C_2$ aliphatic.

27. The composition of Claim18 wherein $R_1$, $R_3$, and $R_4$ are hydrogen and $R_2$ and $R_5$ represents a five carbon membered ring.

28. The composition of Claim18 wherein $R_1$ and $R_2$ are $C_1$ aliphatic and $R_3$, $R_4$ and $R_5$ are hydrogen.

29. The composition of Claim18 wherein $R_1$, $R_3$ and $R_4$ are hydrogen, $R_2$ is a $C_1$ aliphatic ether and $R_5$ is $C_1$ aliphatic.

30. The composition of Claim18 wherein $R_3$ and $R_4$ are hydrogen, $R_1$ and $R_2$ are $C_1$ aliphatic and $R_5$ is a $C_3$ branched aliphatic.

31. The composition of Claim18 wherein $R_1$, $R_3$ and $R_4$ are hydrogen and $R_2$ and $R_5$ are combined to form a 5 carbon membered ring.

32. The composition of Claim18 wherein $R_1$ and $R_3$ are hydrogen, $R_4$ is $C_1$ aliphatic and $R_2$ and $R_5$ are combined to form a 5 carbon membered ring.